# EUROPEAN PATENT APPLICATION

(11) **EP 3 073 618 A1**
(43) Date of publication of application: **28.09.2016**
(21) Application number: 16161830.1
(22) Date of filing: 23.03.2016
(51) Int. Cl.: H02K 5/20, H02K 9/20, H02K 5/18

(54) **MOTOR CASE COOLING UTILIZING PHASE CHANGE MATERIAL**

(30) Priority: 27.03.2015 US 201514670569
(71) Applicant: Hamilton Sundstrand Corporation, Windsor Locks, CT 06096-1010 (US)
(72) Inventor: ADIMULA, Ravi, St. Johns, FL Florida 32259 (US); BALSIGER, Derick S., Mayer, AZ Arizona 86333 (US)
(74) Representative: Bridge, Kerry Ann

(57) **Abstract**

A motor includes a rotor 12 positioned adjacent to a stator case 14. A cooling system in the motor includes a plurality of fins 26, at least one coolant reservoir 18, and condenser coils 20. The plurality of fins 26 is disposed along an external surface of the stator case 14. The at least one coolant reservoir 18 is attached to the stator case. The at least one coolant reservoir 18 covers and is in fluid communication with at least a portion of the plurality of pin fins 26. The condenser coils 20 are attached to the at least one coolant reservoir 18.

## Description

### BACKGROUND

The present invention relates to electric motors, and in particular, to a method for cooling electric motors.

Typical motor stator cases are designed to dissipate steady state thermal power. These steady state dissipation systems often do not adequately absorb large amounts of momentary power dissipation in instances of transient thermal surge events in certain applications where transient thermal power dissipation is prevalent.

### SUMMARY

A motor includes a rotor positioned adjacent to a stator case. A cooling system in the motor includes a plurality of fins, at least one coolant reservoir, and condenser coils. The plurality of fins is disposed along an external surface of the stator case. The at least one coolant reservoir is attached to the stator case. The at least one coolant reservoir covers and is in fluid communication with at least a portion of the plurality of pin fins. The condenser coils are attached to the at least one coolant reservoir.

A method of cooling a motor includes operating the motor. A coolant is contained in a coolant reservoir attached to a stator case of the motor. Thermal energy is transferred from the stator case into the coolant by passing the coolant through fins pins disposed on an external surface of the stator case. The thermal energy of the coolant is increased. The phase of the coolant is changed into a gas. The coolant flows into condenser coils that are in fluid communication with the coolant reservoir. The thermal energy of the coolant is decreased as the coolant flows through the condenser coils. The phase of the coolant is changed into a liquid.

### BRIEF DESCRIPTION OF THE DRAWINGS

FIG. 1 is a perspective view of a motor assembly with an attached cooling system.
FIG. 2 is a perspective view of a motor assembly.
FIG. 3 is a perspective view of a cooling system.

### DETAILED DESCRIPTION

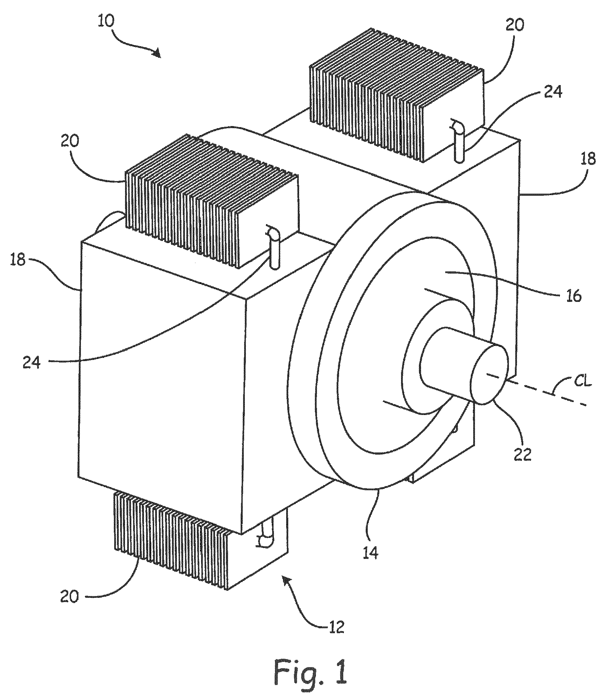

FIG. 1 is a perspective view of motor assembly 10 with attached cooling system 12. Motor assembly 10 includes cooling system 12, stator case 14, and rotor 16. Cooling system 12 includes coolant reservoirs 18, and condenser coils 20. Rotor 16 is positioned adjacent to stator case 14. In this embodiment, rotor 16 is positioned radially inward from stator case 14. Coolant reservoirs 18 are fastened to an external surface of stator case 14. Condenser coils 20 are connected to an external surface of coolant reservoirs 18. Rotor 16 includes rotor shaft 22. Rotor shaft 22 extends outward from rotor 16 in a direction collinear with axis C_{L} of rotor 16. Rotor shaft 22 can be configured to attach to an element of an aircraft.

During operation of motor assembly 10, rotor 16 rotates within stator case 14. An electric current is produced in stator case 14 which creates a magnetic field that rotates rotor 16. As rotor 16 rotates within stator case 14, thermal energy is created and absorbed into stator case 14. During thermal surge events experienced by motor assembly 10, large amounts of transient thermal energy are absorbed by stator case 14. Motor assembly 10 can include an electric motor or other types of motors.

Coolant reservoirs 18 contain a coolant that is in fluid communication with stator case 14. The coolant is configured to receive thermal energy from stator case 14. Stator case 14 is configured to transfer thermal energy to the coolant and may include variations on a surface of stator case 14 that enable increased rates of thermal energy transfer. Some examples of such variations on the surface of the stator case may include pin fins, undulations, protrusions, and/or other non-curvilinear features in or on the surface of stator case 14. Coolant reservoirs 18 attach to stator case 14 such that coolant reservoirs 18 cover the variations on the surface of stator case 14.

As thermal energy is transferred from stator case 14 to the coolant, the coolant can absorb enough thermal energy to change the phase of the coolant. For example, if the coolant were in solid form, the increase in thermal energy in the coolant would turn the coolant into a liquid. If the coolant were in liquid form, the increase in thermal energy in the coolant would turn the coolant into a gas. The coolant includes a material capable of changing phases, and may specifically include water. The specific material used for the coolant may be selected based upon the operating characteristics of the motor and the thermodynamic characteristics of the coolant such as specific heat capacity, boiling point, flash point, conductivity, and other thermodynamic characteristics. For example, water can be used as the coolant due to the relatively high specific heat capacity of water. Additionally, the amount of coolant can be varied to adjust thermodynamic characteristics of the coolant or the operating characteristics of motor assembly 10 such as the duty cycle rate and size of motor assembly 10.

After the coolant has phase changed into a gas, the coolant flows into condenser coils 20. Condenser coils 20 are in fluid communication with coolant reservoirs 18. In this embodiment, two condenser coils are attached to each of coolant reservoirs 18. Condenser coils 20 include tubing 24 extending through and out of condenser coils 20 to transport the coolant. Condenser coils 20 include a shape that maximizes the thermal energy transfer from condenser coils 20 into the air surrounding condenser coils 20. Condenser coils 20 typically include steel or aluminum, but could also include another type of material to achieve a desired set of performance and/or thermal characteristics of condenser coils 20. Specifically, the type of material used for condenser coils 20 maximizes the transfer rate of thermal energy from the coolant to condenser coils 20 and also from condenser coils 20 into the air surrounding condenser coils 20. The configuration of condenser coils 20 can also be varied to adjust the set of thermodynamic characteristics of condenser coils 20.

As the coolant flows into and through condenser coils 20, thermal energy is drawn out of the coolant and into condenser coils 20, therefore decreasing the amount of thermal energy of the coolant. Thermal energy is then drawn out of condenser coils 20 and into air surrounding condenser coils 20. As thermal energy is drawn out of the coolant and into condenser coils 20, the coolant may change phases from a gas to a liquid. The coolant in gas or liquid form is then drawn out of condenser coils 20 and back into coolant reservoirs 18. Cooling system 12 includes a hermetically sealed system through which coolant 30 travels. Cooling system 12 is pressurized due to the thermal expansion of the fluid and the phase change of the fluid into a gas and is self-pumping. Cooling system 12 does not include an external pumping mechanism to operate and/or pump the coolant.

The phase change capability of the coolant in motor assembly 10 allows for momentary large power dissipations in motor assembly 10 while keeping the temperature of stator case 14 within or below desired operational temperature limits. Motor assembly 10 also enables the use of a smaller size motor that requires a smaller thermal mass to dissipate the necessary heat, whereas a larger size motor without coolant reservoirs and condenser coils would require a larger thermal mass to dissipate heat to remain within operational temperature limits.

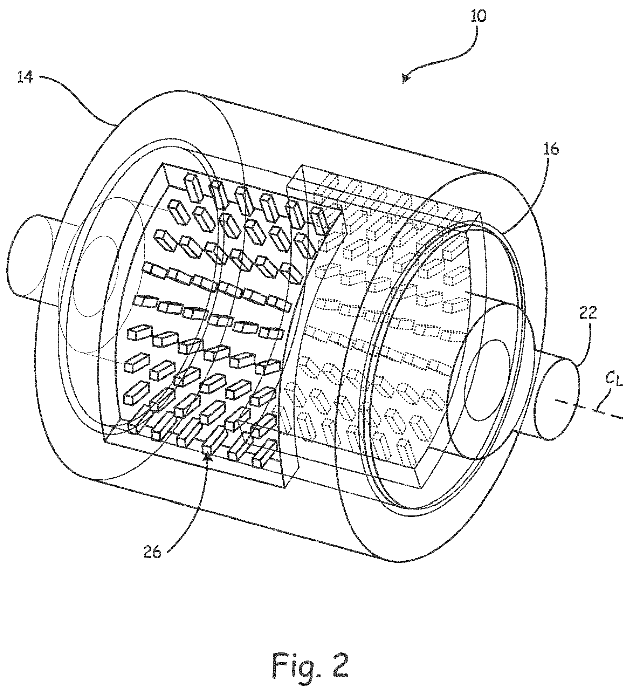

FIG. 2 is a perspective view of motor assembly 10. Motor assembly 10 includes stator case 14, rotor 16, rotor shaft 22, and pin fins 26. Rotor 16 is positioned adjacent to stator case 14. In this embodiment, rotor 16 is positioned radially inward from stator case 14. Rotor shaft 22 extends outward from rotor 16 in a direction collinear with axis C_{L} of rotor 16. Rotor shaft 22 can be configured to attach to an element of an aircraft. Pin fins 30 are disposed along an external surface of stator case 14. In this embodiment the coolant reservoirs have been omitted in order to show pin fins 26.

Pin fins 26 can be attached to or machined into stator case 14. The shape of pin fins 26 can be designed to achieve a desired set of performance and/or thermal characteristics of motor assembly 10. In this embodiment, pin fins 26 include a block shape. Other geometries may include cylinders, obelisks, pyramids, or other geometries that can be used to maximize the surface area of pin fins 26 to enable a high rate of thermal energy transfer. Pin fins 26 are configured to transfer thermal energy from stator case 14 into a coolant by passing the coolant through pin fins 26. Pin fins 26 can include the same material as used in stator case 14, or pin fins 26 may include other shapes and/or materials configured to obtain a desired set of performance and/or thermal characteristics of motor assembly 10. For example, the shape or material used for pin fins 26 could maximize the transfer rate of thermal energy from stator case 14 to pin fins 26 and/or from pins fins 26 to the coolant. During installation on coolant reservoir 18 onto stator case 14, coolant reservoir 18 covers pin fins 26.

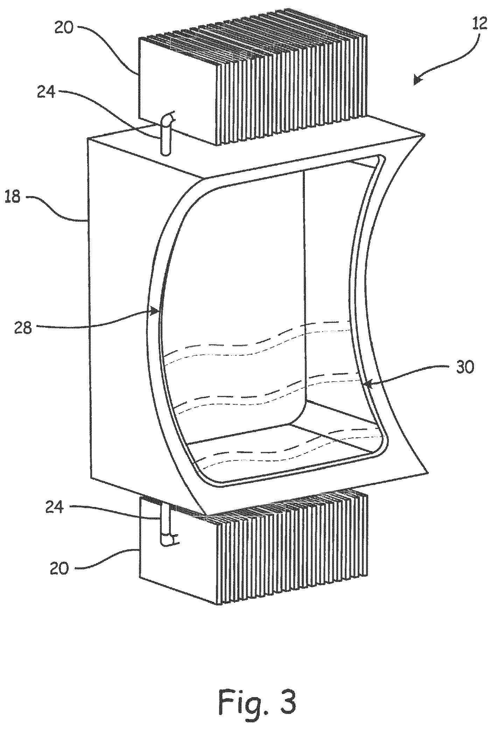

FIG. 3 is a perspective view of cooling system 12. Cooling system 12 includes coolant 30, coolant reservoir 18, condenser coils 20, and seal 28. Coolant reservoir 18 contains coolant 30. Condenser coils 20 are connected to an external surface of coolant reservoir 18 by tubing 24. Seal 28 surrounds an edge of coolant reservoir 18. Seal 28 is configured to form a seal between coolant reservoir 18 and a stator case (not shown) that coolant reservoir 18 fastens to.

When fastened to stator case 14, cooling system 12 includes a hermetically sealed system through which coolant 30 travels. As described in previous embodiments, coolant 30 receives thermal energy from stator case 14. As coolant 30 receives thermal energy from the stator case, the temperature of coolant 30 increases and eventually the phase of coolant 30 changes into a gas. After coolant 30 phase changes into a gas, coolant 30 flows through tubing 24 and into condenser coils 20 which are in fluid communication with coolant reservoir 18. The thermal energy of coolant 30 is decreased as coolant 30 flows through condenser coils 20 by transferring thermal energy from coolant 30 into condenser coils 20. Thermal energy from condenser coils 20 is then transferred from condenser coils 20 into air surrounding condenser coils 20. As the thermal energy of coolant 30 is decreased, the phase of coolant 30 is changed into a liquid.

The configuration of condenser coils 20 can be varied to adjust a set of thermodynamic characteristics of condenser coils 20. The amount of coolant 30 in coolant reservoir 18 to adjust a set of thermodynamic characteristics of coolant 30.

### Discussion of Possible Embodiments

The following are non-exclusive descriptions of possible embodiments of the present invention.

A motor may include a rotor positioned adjacent to a stator case. A cooling system in the motor may include a plurality of fins, at least one coolant reservoir, and/or condenser coils. The plurality of fins may be disposed along an external surface of the stator case. The at least one coolant reservoir may be attached to the stator case. The at least one coolant reservoir may cover and may be in fluid communication with at least a portion of the plurality of pin fins. The condenser coils may be attached to the at least one coolant reservoir.

The motor of the preceding paragraph can optionally include, additionally and/or alternatively, any one or more of the following features, configurations and/or additional components:
a further embodiment of the foregoing motor, wherein the at least one coolant reservoir may include a seal positioned between the at least one coolant reservoir and the stator case;
a further embodiment of the foregoing motor, wherein the fin pins may be machined into the external surface of the stator case;
a further embodiment of the foregoing motor, wherein the motor may include an electric motor with at least one stator and at least one rotor;
a further embodiment of the foregoing motor, wherein the motor may include a motor shaft configured to attach to an element of an aircraft;
a further embodiment of the foregoing motor, wherein the at least one coolant reservoir may contain water; and
a further embodiment of the foregoing motor, wherein the cooling system may be hermetically sealed.

A method of cooling a motor may include operating the motor. A coolant may be contained in a coolant reservoir attached to a stator case of the motor. Thermal energy may be transferred from the stator case into the coolant by passing the coolant through fins pins disposed on an external surface of the stator case. The thermal energy of the coolant may be increased. The phase of the coolant may be changed into a gas. The coolant may flow into condenser coils that are in fluid communication with the coolant reservoir. The thermal energy of the coolant may be decreased as the coolant flows through the condenser coils. The phase of the coolant may be changed into a liquid.

The method of cooling a motor of the preceding paragraph can optionally include, additionally and/or alternatively, any one or more of the following features, configurations, steps, and/or additional components:
a further embodiment of the foregoing method of cooling a motor, wherein the method may further include disposing the pin fins onto the external surface of the stator case by machining the pin fins into the external surface of the stator case;
a further embodiment of the foregoing method of cooling a motor, wherein decreasing the thermal energy of the coolant as the coolant flows through the condenser coils may include transferring thermal energy from the condenser coils into air surrounding the condenser coils;
a further embodiment of the foregoing method of cooling a motor, wherein the method may further include fastening the coolant reservoir to the stator case;
a further embodiment of the foregoing method of cooling a motor, wherein the method may further include covering the pin fins with the coolant reservoir;
a further embodiment of the foregoing method of cooling a motor, wherein transferring thermal energy from the stator case into the coolant may include transferring thermal energy from the fin pins into the coolant;
a further embodiment of the foregoing method of cooling a motor, wherein the method may further include varying the configuration of the condenser coils to adjust a set of thermodynamic characteristics of the condenser coils; and
a further embodiment of the foregoing method of cooling a motor, wherein the method may further include varying the amount of coolant in the coolant reservoir to adjust a set of thermodynamic characteristics of the coolant.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A motor comprising:
a stator case (14);
a rotor (10) positioned adjacent to the stator case; and
a cooling system (12), including:
a plurality of pin fins (26) disposed along an external surface of the stator case;
at least one coolant reservoir (18) attached to the stator case (14), wherein the at least one coolant reservoir (18) covers and is in fluid communication with at least a portion of the plurality of pin fins (26); and
condenser coils (20) attached to the at least one coolant reservoir.

2. The motor of claim 1, wherein the at least one coolant reservoir (18) includes a seal (28) positioned between the at least one coolant reservoir and the stator case.

3. The motor of claim 1 or 2, wherein the fin pins (26) are machined into the external surface of the stator case (14).

4. The motor of any preceding claim, wherein the motor includes an electric motor with at least one stator and at least one rotor and further wherein the at least one rotor is positioned radially inward from the stator case (14).

5. The motor of any preceding claim, wherein the motor includes a motor shaft configured to attach to an element of an aircraft.

6. The motor of any preceding claim, wherein the at least one coolant reservoir contains water.

7. The motor of any preceding claim, wherein the cooling system is hermetically sealed.

8. A method of cooling a motor, the method comprising:
operating the motor;
containing a coolant in a coolant reservoir (18) attached to a stator case (14) of the motor;
transferring thermal energy from the stator case into the coolant by passing the coolant through fin pins (26) disposed on an external surface of the stator case (14);
increasing the thermal energy of the coolant;
changing the phase of the coolant into a gas;
flowing the coolant into condenser coils (20) that are in fluid communication with the coolant reservoir (18);
decreasing the thermal energy of the coolant as the coolant flows through the condenser coils (20); and
changing the phase of the coolant into a liquid.

9. The method of claim 8 further including disposing the pin fins (26) onto the external surface of the stator case by machining the pin fins into the external surface of the stator case.

10. The method of any of claims 8 to 9, wherein decreasing the thermal energy of the coolant as the coolant flows through the condenser coils (20) includes transferring thermal energy from the condenser coils into air surrounding the condenser coils (20).

11. The method of any of claims 8 to 10 further including fastening the coolant reservoir (18) to the stator case (14).

12. The method of any of claims 8 to 11 further including covering the pin fins (26) with the coolant reservoir (18).

13. The method of any of claims 8 to 12, wherein transferring thermal energy from the stator case (14) into the coolant includes transferring thermal energy from the fin pins (26) into the coolant.

14. The method of any of claims 8 to 13 further including varying the configuration of the condenser coils (20) to adjust a set of thermodynamic characteristics of the condenser coils (20).

15. The method of any of claims 8 to 14 further including varying the amount of coolant in the coolant reservoir (18) to adjust a set of thermodynamic characteristics of the coolant.
